# EUROPÄISCHE PATENTANMELDUNG

(11) **EP 2 000 714 A2**
(43) Veröffentlichungstag der Anmeldung: **10.12.2008**
(21) Anmeldenummer: 08009591.2
(22) Anmeldetag: 27.05.2008
(51) Int. Cl.: F16K 11/048

(54) **Fluid-Ventilanordnung**

(30) Priorität: 08.06.2007 DE 102007026698
(71) Anmelder: Sultex AG, 8630 Rüti (ZH) (CH)
(72) Erfinder: Bigler, Ernst, 8542 Wiesendangen (CH)
(74) Vertreter: Holzmüller, Reinhold

(57) **Zusammenfassung**

Eine Fluid-Ventilanordnung (10) mit einem Ventilgehäuse (11), das mindestens einen Durchlass (14, 15, 16) für das Fluid (F) aufweist, und mit einem im Ventilgehäuse (11) beweglich angeordneten Ventilkörper (12) zum Öffnen und Schließen des Fluid-Durchlasses (14, 15, 16), wobei der Ventilkörper (12) zwischen zwei Schließstellungen im Ventilgehäuse (11) hin und her bewegbar ist und in den Mittelstellungen zwischen den Schließstellungen den Fluid-Durchlass (14, 15, 16) freigibt.

## Beschreibung

Die Erfindung betrifft eine Fluid-Ventilanordnung mit einem Ventilgehäuse, das mindestens einen Durchlass für das Fluid aufweist, und mit einem im Ventilgehäuse beweglich angeordneten Ventilkörper zum Öffnen und Schließen des Durchlasses.

Solche Ventile zum Öffnen und Schließen eines Durchlasses für ein Gas oder eine Flüssigkeit sind bereits in vielfältigen Ausführungsformen bekannt. Der Ventilkörper dieser Ventile lässt sich zwischen einer Schließstellung, in der er den Durchlass versperrt, und einer Öffnungsstellung, in der er den Durchlass freigibt, hin und her bewegen. Zum Öffnen und wieder Schließen des Ventils ist somit eine Richtungsumkehr des Ventilkörpers erforderlich. Daher benötigen diese bekannten Ventile eine relativ hohe Schaltzeit.

Aus der DE 603 06 091 T2, EP 0 233 025 und JP 01229176 A sind 3/2-Wege-Ventile bekannt, die jeweils Ventilkörper mit zwei Ventiltellern aufweisen, die je nach Stellung des Ventilkörpers einen von zwei vorgesehenen Ventilsitzen verschließen. Durch ein Hin- und Herbewegen des Ventilkörpers zwischen den Schließstellungen der Ventilsitze kann der Durchlass des Fluids auf andere Wege umgeschaltet werden. Ein vollständiges Sperren dieser Ventile ist nicht möglich.

Die DD 48274 beschreibt ein ähnliches 3/2-Wege-Ventil, bei dem durch Hin- und Herbewegen eines Ventilkörpers mittels des Fluids zwei Schließstellungen erreicht werden, in denen das Ventil vollständig gesperrt ist. Dies aber nur, wenn nur von einem der beiden Eingänge ein Fluid strömt. Wenn von beiden Eingängen gleichzeitig Fluid einströmt, ergibt sich immer auch eine Strömung am Ausgang.

Der vorliegenden Erfindung liegt die Aufgabe zugrunde, eine Ventilanordnung für Fluide zu schaffen, die zum Öffnen und Schließen nur geringe Schaltzeiten benötigt.

Die Aufgabe wird mit einer Fluid-Ventilanordnung mit den Merkmalen des Anspruchs 1 gelöst.

Bei dieser Ventilanordnung ist keine Richtungsumkehr des Ventilkörpers zum Öffnen und wieder Schließen des Ventils erforderlich. Deswegen lassen sich mit der erfindungsgemäßen Ventilanordnung deutlich höhere Schaltgeschwindigkeiten erreichen als mit bekannten Ventilen.

Insbesondere bei Anwendungen, bei denen nur kurzzeitig relativ große Mengen an Fluid freigegeben werden müssen, bietet die erfindungsgemäße Ventilanordnung Vorteile gegenüber herkömmlichen Ventilen. Während die bekannten Ventile durch die erforderliche Richtungsumkehr beim Schalten eine Mindestöffnungs- und -schließzeit haben, die oft länger ist, als für die jeweilige Anwendung erforderlich wäre, wird unnötig viel Fluid und damit Energie verbraucht. Durch die deutlich kürzeren Schaltzeiten bei der erfindungsgemäßen Ventilanordnung kann dieser Nachteil vermieden werden.

Die geometrische Ausgestaltung des Ventilgehäuses und des Ventilkörpers sind auf unterschiedliche Weise möglich. Bei einer bevorzugten Variante der Ventilanordnung sind das Ventilgehäuse zumindest im Inneren zylindrisch und der Ventilkörper kolbenförmig ausgebildet. Dies bedeutet, dass der Ventilkörper im Ventilgehäuses linear bewegt wird, was besonders hohe Schaltgeschwindigkeiten zulässt.

Weitere Vorteile ergeben sich, wenn der Ventilkörper einen im Durchmesser reduzierten Mittelbereich aufweist, der sich in den Mittelstellungen des Ventilkörpers im Bereich des Fluid-Durchlasses befindet. In der Öffnungsstellung des Ventilkörpers behindert dieser Mittelbereich den Volumenstrom des Fluides im Durchlass aufgrund seines geringen Durchmessers nicht.

Der Fluid-Durchlass im Ventilgehäuse kann dabei vorzugsweise von Ein- und Auslassöffnungen im Ventilgehäuse und dem Umgebungsraum des Mittelbereichs des Ventilkörpers gebildet sein. In den Mittelstellungen des Ventilkörpers sind die Öffnungen im Ventilgehäuse nicht durch den Ventilkörper verschlossen, sodass das Fluid ungehindert durch das Ventilgehäuse hindurchströmen kann.

Bei einer bevorzugten Ausführungsform können dabei die Ein- und Auslassöffnungen in Bewegungsrichtung des Ventilkörpers versetzt zueinander im Ventilgehäuse angeordnet sein. Dadurch ist es ausreichend, in den Schließstellungen des Ventilkörpers entweder nur die Einlassöffnung oder nur die Auslassöffnung zu verschließen, um das gesamte Ventil zu sperren. Der Ventilkörper muss somit nur einen geringen Hub ausführen, wodurch sich die Schaltgeschwindigkeit weiter steigern lässt. Es können dabei jeweils nur eine oder auch mehrere Einlassöffnungen und Auslassöffnungen vorgesehen sein.

Bei einer zweckmäßigen Ausgestaltung können die Einlass- und Auslassöffnungen außerdem an unterschiedlichen Umfangstellen, vorzugsweise an gegenüberliegenden Umfangstellen im Ventilgehäuse, angeordnet sein. Bei einer gegenüberliegenden Anordnung der Öffnungen strömt das Fluid gerade durch das Ventilgehäuse hindurch. Sind die Einlassöffnung und die Auslassöffnung in einem bestimmten Winkel zueinander angeordnet, so erfolgt durch das Ventilgehäuse eine Umlenkung des Fluid-Stroms bei geöffnetem Ventil.

Zweckmäßigerweise können an den Übergängen vom Mittelbereich zu den Endbereichen des Ventilkörpers Dichtstellen zwischen Ventilkörper und einem Abschnitt reduzierten Innendurchmessers des Ventilgehäuses angeordnet sein, um ein zuverlässiges Schließen des Ventils zu gewährleisten. Selbstverständlich können weitere Dichtstellen zwischen Ventilkörper und Ventilgehäuse vorgesehen werden, insbesondere dann, wenn der Ventilkörper pneumatisch oder hydraulisch angetrieben wird.

Bei zylindrischer Ausgestaltung des Ventilgehäuses und einem kolbenförmigen Ventilkörper können an den Dichtstellen vorteilhafterweise elastische Dichtkörper angeordnet sein.

Weitere Vorteile ergeben sich, wenn der Ventilkörper mit seinen Endbereichen auf der inneren Oberfläche des Ventilgehäuses gleitend bewegbar ist, d.h. nur geringe Reibungsverluste bei der Bewegung des Ventilkörpers auftreten.

Im Bereich der Gleitflächen können dabei Dichtungen zwischen Ventilkörper und Ventilgehäuse gegen Leckage vorgesehen sein.

Für die erfindungsgemäße Ventilanordnung sind grundsätzlich sämtliche bei Ventilen eingesetzte Antriebsmöglichkeiten ebenfalls einsetzbar. So kann der Ventilkörper pneumatisch, hydraulisch, elektromagnetisch oder elektromotorisch bewegbar sein.

Weiter ist es von Vorteil, das Ventil als Einsatz auszugestalten, der sehr nahe an der Funktionsstelle platziert werden kann. Dadurch lassen sich äußerst kurze Reaktionszeiten erzielen. Außerdem kann das Ventil aus sehr einfache Bauteilen hergestellt werden.

Es lassen sich auch mehrere Ventile mit entgegengesetzter Funktionsrichtung einsetzen, um Unterschiede in der Reaktionsgeschwindigkeit ausgleichen zu können.

Der Einsatzbereich der erfindungsgemäßen Ventilanordnung ist ausgesprochen breit. Bei jeder Anwendung, bei der kurzzeitig ein großer Volumenstrom eines Fluides und geringe Schaltzeiten erwünscht sind, kann die Ventilanordnung mit Vorteil.eingesetzt werden.

So lässt sich die Ventilanordnung beispielsweise als Druckluftventil bei Textilmaschinen einsetzen. Insbesondere bei Webmaschinen bietet der Einsatz der Ventilanordnung an mehreren Stellen Vorteile. Durch die Ventilanordnung kann beispielsweise ein Druckluftstoß freigesetzt werden, der ein Projektil beschleunigt, das den Schussfaden durch das Webfach trägt.

Eine weitere mögliche Anwendung bei einer Luftdüsenwebmaschine ist die Ansteuerung der so genannten Stafettendüsen, die mittels Druckluft den Schussfadenanfang gestreckt und in der gewünschten Position halten. Diese Düsen sind über die gesamte Länge des Bereichs des Schusseintrags verteilt angeordnet und verursachen einen entscheidenden Teil des Energieverbrauchs einer Luftdüsenwebmaschine. Die bislang zur Ansteuerung der Stafettendüsen eingesetzten elektromagnetisch geschalteten Ventile mit einer Richtungsumkehr des Ventilkörpers zwischen Öffnungsstellung und Schließstellung des Ventils sind für diese Anwendung zu lange geöffnet und verbrauchen daher unnötig viel Druckluft und damit Energie.

Nachfolgend wird ein bevorzugtes Ausführungsbeispiel einer erfindungsgemäßen Ventilanordnung anhand der Zeichnungen näher beschrieben.

Es zeigen:
- Fig. 1: einen Längsschnitt durch eine Ventilanordnung in einer ersten Schließstellung;
- Fig. 2: einen der Figur 1 entsprechenden Längsschnitt durch die Ventilanordnung in einer Öffnungsstellung;
- Fig. 3: einen der Figur 1 entsprechenden Längsschnitt durch die . Ventilanordnung in einer zweiten Schließstellung.

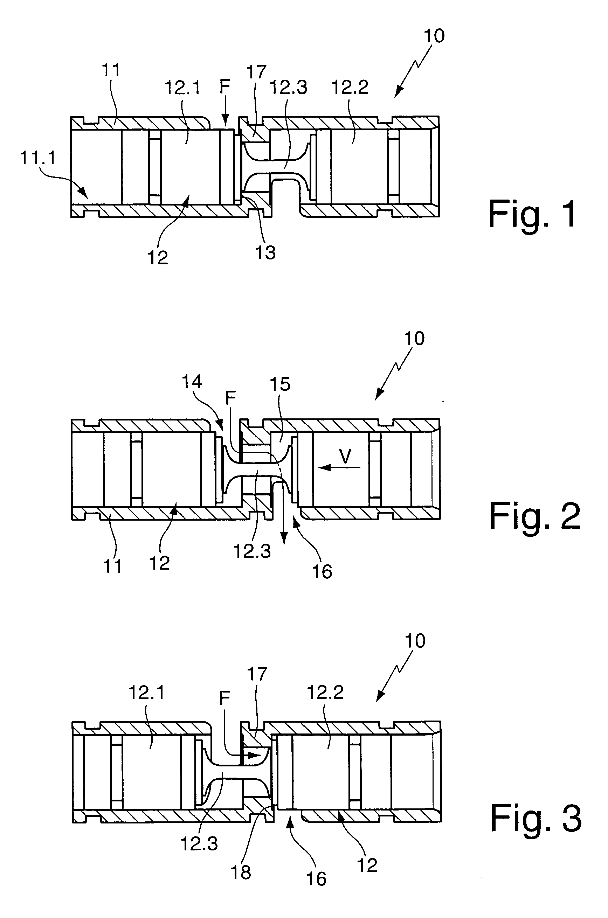

Die Figuren 1 bis 3 zeigen eine beispielhafte Ausgestaltung einer Ventilanordnung 10 mit einem zylindrischen Ventilgehäuse 11 und einem im Ventilgehäuse 11 angeordneten Ventilkörper 12, der in den Figuren 1 bis 3 in unterschiedlichen Stellungen dargestellt ist. Der Ventilkörper 12 weist zwei Endbereiche 12.1 und 12.2 auf, die einen Außendurchmesser aufweisen, der dem lichten Innendurchmesser des Ventilgehäuses 11 entspricht. Mit diesen Endbereichen 12.1 und 12.2 kann der Ventilkörper 12 auf der inneren Oberfläche 11.1 entlanggleiten. Zwischen den beiden Endbereichen 12.1 und 12.2 weist der Ventilkörper 12 einen Mittelbereich 12.3 auf, der im Durchmesser gegenüber den Endbereichen 12.1 und 12.2 deutlich reduziert ist.

In Figur 1 befindet sich der Ventilkörper 12 in einer ersten Schließstellung. Der Ventilkörpers 12 bildet mit dem Ventilgehäuse 11 eine erste Dichtstelle 13 am Übergang vom Endbereich 12.1 zum Mittelbereich 12.3, der an einem Abschnitt 17 reduzierten Innendurchmessers im Ventilgehäuse 11 anliegt. Diese Dichtstelle 13 verhindert den Fluss eines Fluides F durch das Ventilgehäuse 11 hindurch.

In Figur 2 ist der Ventilkörper 12 in Pfeilrichtung v beschleunigt worden, wodurch die Dichtstelle 13 freigegeben wurde. Das Fluid F kann jetzt durch einen Durchlass 15 im Ventilgehäuse 11 strömen, der von einer Einlassöffnung 14, dem Umgebungsraum 15 des Mittelbereiches 12.3 des Ventilkörpers im Ventilgehäuses 11 und einer Auslassöffnung 16 gebildet wird. Die Einlassöffnung 14 und die Auslassöffnung 16 sind dabei auf gegenüberliegenden Seiten des Ventilgehäuses 11 und in Bewegungsrichtung des Ventilkörpers 12 versetzt zueinander angeordnet, wobei sich der Abschnitt 17 reduzierten Innendurchmessers des Ventilgehäuses 11 zwischen der Einlassöffnung 14 und der Auslassöffnung 16 befindet.

Bei weiterer Bewegung in Pfeilrichtung v erreicht der Ventilkörper 12 seine zweite Schließstellung, wie Figur 3 zeigt. Nun liegt der Übergang zwischen dem Endbereich 12.2 und dem Mittelbereich 12.3 des Ventilkörpers 12 am Abschnitt 17 reduzierten Innendurchmessers des Ventilgehäuses 11 an und bildet somit eine zweite Dichtstelle 18. Die Auslassöffnung 16 wird durch den Endbereich 12.2 verschlossen, sodass kein Fluid F durch das Ventilgehäuse 11 strömen kann.

Die Ventilanordnung 10 wird somit durch Bewegungen des Ventilkörpers 12 in einer einzigen Richtung geöffnet und wieder geschlossen. Die Schaltzeit der Ventilanordnung 10 ist daher gegenüber der Schaltzeit herkömmlicher Ventile, bei der der Ventilkörper eine Richtungsumkehr zwischen dem Öffnen und Schließen erfährt, nur ungefähr halb so lang.

## Patentansprüche

1. Fluid-Ventilanordnung mit einem Ventilgehäuse (11), das mindestens einen Durchlass (14, 15, 16) für das Fluid (F) aufweist, und mit einem im Ventilgehäuse (11) beweglich angeordneten Ventilkörper (12) zum Öffnen und Schließen des Fluid-Durchlasses (14, 15, 16), **dadurch gekennzeichnet, dass** der Ventilkörper (12) zwischen zwei Schließstellungen, in denen kein durch eine oder mehrere Einlassöffnungen (14) einströmendes Fluid zu einer Auslassöffnung (16) austreten kann, im Ventilgehäuse (11) hin und her bewegbar ist und in den Mittelstellungen zwischen den Schließstellungen den Fluid-Durchlass (14, 15, 16) zwischen der oder den Einlassöffnungen (14) und der oder den Auslassöffnungen (16) freigibt.

2. Ventilanordnung nach Anspruch 1, **dadurch gekennzeichnet, dass** das Ventilgehäuse (11) zumindest im Inneren zylindrisch und der Ventilkörper (12) kolbenförmig ausgebildet ist.

3. Ventilanordnung nach Anspruch 1 oder 2, **dadurch gekennzeichnet, dass** der Ventilkörper (12) einen im Durchmesser reduzierten Mittelbereich (12.3) aufweist, der sich in den Mittelstellungen des Ventilkörpers (12) im Bereich des Fluid-Durchlasses (14, 15, 16) befindet.

4. Ventilanordnung nach Anspruch 3, **dadurch gekennzeichnet, dass** der Fluid-Durchlass (14, 15, 16) von Ein- und Auslassöffnungen (14, 16) im Ventilgehäuse (11) und dem Umgebungsraum (15) des Mittelbereichs (12.3) des Ventilkörpers (12) gebildet wird.

5. Ventilanordnung nach Anspruch 4, **dadurch kennzeichnet, dass** die Ein- und Auslassöffnungen (14, 16) in Bewegungsrichtung des Ventilkörpers (12) versetzt zueinander im Ventilgehäuse (11) angeordnet sind.

6. Ventilanordnung nach Anspruch 4 oder 5, **dadurch gekennzeichnet, dass** die Ein- und Auslassöffnungen (14, 16) an unterschiedlichen Umfangstellen, vorzugsweise gegenüberliegenden Umfangstellen im Ventilgehäuse (11) angeordnet sind.

7. Ventilanordnung nach einem der Ansprüche 3 bis 6, **dadurch gekennzeichnet, dass** an den Übergängen vom Mittelbereich (12.3) zu den Endbereichen (12.1, 12.2) des Ventilkörpers (12) Dichtstellen (13, 18) zwischen Ventilkörper (12) und einem Abschnitt (17) reduzierten Innendurchmessers des Ventilgehäuses (11) angeordnet sind.

8. Ventilanordnung nach Anspruch 7, **dadurch gekennzeichnet, dass** an den Dichtstellen (13, 18) elastische Dichtkörper angeordnet sind.

9. Ventilanordnung nach einem der Ansprüche 3 bis 8, **dadurch gekennzeichnet, dass** der Ventilkörper (12) mit seinen Endbereichen (12.1, 12.2) auf der inneren Oberfläche (11.1) des Ventilgehäuses (11) gleitend bewegbar ist.

10. Ventilanordnung nach Anspruch 9, **dadurch gekennzeichnet, dass** im Bereich der Gleitflächen Dichtungen zwischen Ventilkörper (12) und Ventilgehäuse (11) gegen Leckage vorgesehen sind.

11. Ventilanordnung nach einem der vorhergehenden Ansprüche, **dadurch gekennzeichnet, dass** der Ventilkörper (12) pneumatisch, hydraulisch, elektromagnetisch oder elektromotorisch bewegbar ist.
